# EUROPEAN PATENT APPLICATION

(11) **EP 1 600 272 A1**
(43) Date of publication of application: **30.11.2005**
(21) Application number: 03704719.8
(22) Date of filing: 12.02.2003
(51) Int. Cl.: B29C 45/14, B29C 70/78, B29D 31/00

(54) **METHOD FOR THE PRODUCTION OF A STRUCTURAL PART COMPRISING A RIGID MATERIAL AND A PLASTIC MATERIAL, AND STRUCTURAL COMPOSITE PART THUS OBTAINED**

(71) Applicant: Sintex Beteiligungs, GmbH., 6850 Dornbirn (AT)
(72) Inventor: RUIZ, Rafael, 08630 Abrera, Barcelona (ES)
(74) Representative: Primo de Rivera y Urquijo, Jose A.
(86) International application number: PCT/ES2003/000077
(87) International publication number: WO 2004/071741

(57) **Abstract**

The process comprises injecting a melted plastic material into a mold in which a plate part (10) is arranged with at least one hole (13) inter-placed between first and second cavities (21, 22), then withdrawing the plate part (10) from the mold with at least one reinforcing rib (30) of plastic material adjacent one side (11), and at least a projection integral to the rib (30), projecting on the other side (12) through the hole (13), and finally deforming said projection by application of heat and pressure to form a fixing head (32) with a grip configuration (33). The composite structural part is integrated by the plate part (10) and the reinforcing rib (30) firmly connected thereto by means of said fixing head (32).

## Description

### Field of the Invention

The present invention relates to a process for manufacturing a composite structural part of a rigid material and a plastic material, and more specifically to a process comprising a molding of a plastic material portion on a rigid material portion and a subsequent consolidation of the connection of both parts by application of heat and pressure. The present invention also relates to a composite structural part of a rigid material and a plastic material susceptible of being obtained by such process.

The invention is useful for manufacturing light-weight resistant components and is applicable in industrial fields such as the manufacture of automobiles, household appliances, office machinery, furniture, light-weight structures, decoration, among others.

### Technical Background

It has been found that light-weight structural elements, with a relatively high strength and controlled deformation capacity, can be obtained from the combination of one part made of a rigid material, such as metal plate, formed by deep-drawing, for example, and several thin ribs of plastic material arranged such as to form a suitable framework inside depressed spaces formed by the deep-drawing of the part made of rigid material. The issue is how to connect both parts of different materials.

The formation of a composite structural part has been known for some time by forming on one side a metal plate part provided with holes, and on the other side a molded plastic part provided with bosses, to later connect both parts by passing the bosses of the plastic part through the holes of the metal plate and upsetting the bosses by means of the application of heat and pressure to flatten them and extend them on areas of the metal plate immediately next to the respective holes.

US patent US-A-3,367,809 discloses a method of this type in which the application of heat and pressure is carried out by means of a punch actuated by sonic vibration.

The main drawback of the method disclosed above is that the separated plastic part needs to have a structural consistency that is sufficient for allowing the part to be handled without it becoming permanently deformed. This forces including in the plastic part structural elements, the functions of which will subsequently be replaced by the rigid material part in the composite structural part, representing a waste of plastic material. Another drawback is the need to produce, store and handle the plastic material parts separately from the production, storage and handling of the rigid material parts.

US patent US-A-4,106,962 discloses a variant in which the plastic part does not initially have said bosses or other type of projection, but rather the metal plate has dimples in the bottom of which the holes are located. Such dimples naturally form convex dishings on the side of the plate intended for being in contact with the plastic part. The method comprises pressing the metal plate part against the plastic part while localized ultrasonic vibration is applied to the area of the holes, whereby the plastic material softens and flows through the holes, filling said dimples. This method, however, has the same drawbacks mentioned above, and furthermore, if it is used to incorporate reinforcing ribs to a metal plate part, said ribs must have a specific design reinforced to resist the buckling stress produced by the pressure exerted by the metal plate part during the process, generally leading to oversizing which also represents a waste of material plastic.

European patent EP-A-0370342 discloses a light-weight component formed by a shell-shaped main body of a rigid material, such as a metal plate, in the inner space of which reinforcing ribs are arranged. Such ribs are of a synthetic material injected directly on the main body and are connected thereto at discrete connection points through several through openings existing in the main body. Although the manufacturing process is not disclosed in detail in the patent specification, it is suggested that during the injection step, the synthetic material arranged next to the side of the main body corresponding to the ribs passes to the opposite side through said openings where, by virtue of a certain configuration of the main body and/or mold, it forms connection heads extending on areas of the main body immediately next to the holes.

This process allows for forming on the main body plastic ribs which are as thin as necessary without needing to add other structural elements of synthetic material, given that the synthetic material portion will at no time be separated from the main body. However, the connections provided by said connection heads are difficult to break when intending to separate the rigid material and plastic material components for recycling purposes. If the simple system of pulling one component with regard to the other is attempted to be used in order to carry out said separation, this may cause the breakage of the weaker component, i.e. that of the synthetic material, in unwanted areas, leaving smaller or larger pieces of synthetic material connected to the main body by the connection heads. This forces carrying out the separation of the components by means of a much more complex and costly system consisting of grinding the composite part into small pieces and then separating the pieces according to the different properties of the materials, for example, by gravity, by blowing, by magnetic attraction, etc.

On the other hand, injection of the plastic material on metal plate was known long before the application date of said European patent EP 0370342, citing for that purpose patents FR-A.2,029,994 and US-A-3,770,545. The arrangement of reinforcing ribs connected by injection is disclosed, for example, in patent DE-A-1784185, and the arrangement of ribs on a laminar member or plate appears in patent US-A-3,462,330. The connection of a plastic material part to another part by means of the arrangement of bosses or projections of the former through holes existing in the latter and subsequent plastic deformation of said bosses to form connecting rivets is disclosed in patents GB-A-1,312,800 and US-A-4,002,232, in addition to those mentioned above.

An objective of the present invention is to provide a process for manufacturing a composite structural part of a rigid material and a plastic material connected together at localized connection points, of relatively controlled strength, including the formation of a configuration that is useful to facilitate breaking said connection points between both materials for recycling purposes.

Another objective of the present invention is to provide a composite structural part of a rigid material and a plastic material connected together at localized connection points, of relatively controlled resistance, incorporating a configuration that is useful to facilitate breaking said connection points between both materials for recycling purposes.

### Brief Explanation of the Invention

The objectives set forth above and others are reached, according to the present invention, by providing a process for manufacturing a composite structural part of a rigid material and a plastic material. The process comprises the steps of:
a) forming a plate part of a rigid material provided with a first side and a second side and at least one hole extending between said first and second sides;
b) arranging said plate part inside a plastic injection mold which defines a housing for the plate part and at least a first cavity, corresponding to at least one configuration or reinforcing rib, facing said hole, which is at least one in number, on said first side of the plate part, and at least a second cavity, corresponding to at least one projection, facing the hole on said second side of the plate part, the cross section of said second cavity not being larger than the cross section of the hole;
c) injecting a melted plastic material into said mold to fill the first cavity and said second cavity, which is at least one in number, through said hole;
d) removing the plate part from the mold with at least one reinforcing rib of plastic material formed adjacent said first side of the plate part and at least one projection of plastic material integral to said reinforcing rib projecting from said second side of the metal part through the hole;
e) deforming said projection by applying heat and pressure for the purpose of flattening and extending the plastic material of which it is constituted on at least one area of the second side of the plate part adjacent the hole, forming a fixing head, resulting in a composite structural part integrated by the metal part and the reinforcing rib firmly connected thereto by means of said fixing head.

Preferably, step e) furthermore includes forming a grip configuration in the fixing head susceptible of being engaged by an actuation tool for the purpose of applying a turning torque to the fixing head exceeding a predetermined threshold which is enough to break, by torsion, an area of the plastic material included between the reinforcing rib and the fixing head, and thereby facilitating the separation of the rigid material of the metal part and the plastic material of the reinforcing rib for recycling purposes.

Said rigid material is usually a metallic material, such as a steel or aluminum plate, for example, although a plate of a synthetic material could also be used. The plastic material is selected from a group including polypropylenes and polyamides, possibly with fillers, and the application of heat can be carried out by any of the means well known in the art of the sector, such as the approaching of a hot body, application of a hot air flow, ultrasonic vibrations, for example, among others. The choice of any heating source will depend on the type of plastic material used and/or the fillers it includes. By way of example, a hot air flow may be more advantageous for a plastic material with fillers including long fibers. The application of pressure is carried out by means of a cold punch immediately after removing the heat source, when the plastic material is softened. Preferably, a single cold punch will simultaneously form the fixing head and grip configuration in a single operation, although both formations can also be carried out consecutively using two different cold punches. It is also possible to use a single formed hot body to simultaneously carry out the application of heat and the formation of the fixing head with the grip configuration.

In the process of the present invention, the plate part could also be formed by two or more superimposed plates provided with suitable preliminary holding means.

Also provided for is the possibility of forming connections or fixing heads providing a through passage, for example, for arranging electrical cables, ventilation ducts, etc. To that end, the hole in the plate part has a large enough size and the mold is adapted to inject therethrough a crown of plastic material, adjacent the edge of the hole and projecting on the second side of the plate, leaving the central portion of the hole clear. Then, the projecting portion of the crown is deformed by means of the application of heat and pressure on the area of the second side of the plate adjacent the hole in a similar manner as that described above. When the hole is constituted of a relatively large opening, said crown can be broken, providing a large number of localized fixing tabs distributed along the perimeter of the opening. In the case of a non-broken crown, the grip configuration can be arranged in relation to the inner or outer perimeter of the crown. In the case of the broken crown, each fixing tab can incorporate its own grip configuration.

The composite structural part of a rigid material and a plastic material according to the present invention, which is susceptible of being obtained by the process described above, comprises a plate part formed from a rigid material, provided with a first side and a second side and at least one hole extending between said first and second sides, and at least one reinforcing rib of plastic material formed by injection on said first side of the plate part and fixed thereto by at least one fixing head of plastic material integral to said reinforcing rib and connected thereto through the hole. Said fixing head extends at least on an area of the second side of the plate part adjacent the hole. Said fixing head is made of a plastic material deformed by application of heat and pressure, and said plastic material is made of a projection integral to the reinforcing rib and projecting from the second side through the hole. Said projection is formed by injection together with the reinforcing rib and said deformation is carried out in a subsequent operation.

Preferably, the fixing head includes a grip configuration configured and arranged to be engaged by an actuation tool adapted to apply a turning torque to the fixing head exceeding a predetermined threshold which is enough to break, by torsion, an area of the plastic material included between the reinforcing rib and the fixing head to facilitate separating the rigid material of the metal part and the plastic material of the reinforcing rib for recycling purposes at the end of the useful life of the composite part.

The fact that the connection points provided by the fixing heads are obtained by a combination of injection and subsequent upsetting by means of the application of heat and pressure, has the advantage over the parts from the state of the art in which only injection is carried out, of being able to control the final strength of the connections within certain limits. This is because three parameters intervene in the upsetting or thermal deformation operation, namely, the heating temperature, the time for application of said heating temperature and the deformation pressure, which define, in combination with the geometry chosen for the hole and immediate areas thereof in the metal part and for the fixing head, the final internal structure and arrangement of the plastic material in the area involved. Therefore, by changing the geometric design and regulating said three parameters, the final strength of the connection points can relatively be determined, which is not possible with a process involving only injection, in which only the geometric design can be changed to control the strength of the connection points.

It is believed that the variation of the three said parameters, temperature, time and pressure, affects the mechanical features of the connection points due to a certain degradation of the plastic material experienced during the heat and pressure application operations. By way of example, a test carried out by means of three test specimens consisting of composite structural parts of identical composition and geometry and with the connections carried out by deformation at a single heating temperature of 330ºC by means of the approaching of a hot body for a single time of 25 seconds, and varying only the deformation pressure at 2 bars, 4 bars and 6 bars, respectively, has resulted in flexural breaking strength limits of about 5532 N, 5483 N and 5297 N, respectively. In other words, the breaking strength varied about 4.4% between the test specimen carried out at 2 bars and the one carried out at 6 bars. It can be understood that the failure of the part upon flexure basically occurs due to the breaking of the fixing heads.

This possibility of controlling the strength has a clear application in the recyclability of the product, given that it allows selecting a strength of the connection points which is high enough to provide the desired rigidity and strength to the composite structural part, especially upon bending, but at the same time low enough so that such connection points can be easily broken by torsion by means of the application of a turning torque with the aid of an actuation tool adapted for being engaged to the fixing head. Once the connection points are broken, the separation of the rigid material of the plate part and the plastic material of the reinforcing rib can easily be carried out by pulling without any large pieces of plastic material remaining connected to the metal part, which makes it very easy to recycle at the end of the useful live of the composite structural part.

Furthermore, comparative tests carried out between a composite structural part with the connection points obtained only by injection and a composite structural part with the connection points obtained by injection and subsequent deformation by application of temperature and pressure have shown that, for a single geometric design and a single plastic material, the turning torque necessary to break the connection points by torsion is clearly higher in the case of only injection (about 2.5 Nm compared to about 1 Nm), whereas the break is clearly cleaner in the second one of injection combined with deformation. In other works, in the first case, pieces of fixing head remain connected to the reinforcing rib through the hole after the break, making the separation difficult, whereas in the second one, the two parts of different materials can be cleanly separated. Furthermore, in the first case, to carry out the tests, it was necessary to provide the fixing heads with some type of grip configuration in order to make it possible to apply the turning torque, given that such configuration was not provided for in the state of the art.

### Brief Description of the Drawings

The features and advantages set forth above and others will be better understood from the following detailed description of several embodiment examples in reference to the attached drawings, in which:
Figure 1 shows a bottom perspective view of a composite structural part according to the present invention;
Figure 2 shows a top perspective view of the composite structural part of the Figure prior to a final phase of the manufacturing process according to the present invention;
Figures 3 to 8 show cross section views illustrating consecutive steps of the manufacturing process according to the present invention;
Figure 9 shows a cross section view illustrating a step prior to the separation of the parts integrating the composite structural part of Figure 1 for recycling purposes; and
Figures 10 to 13 show cross section views illustrating different variants of the part and process of the present invention.

### Detailed Description of the Invention

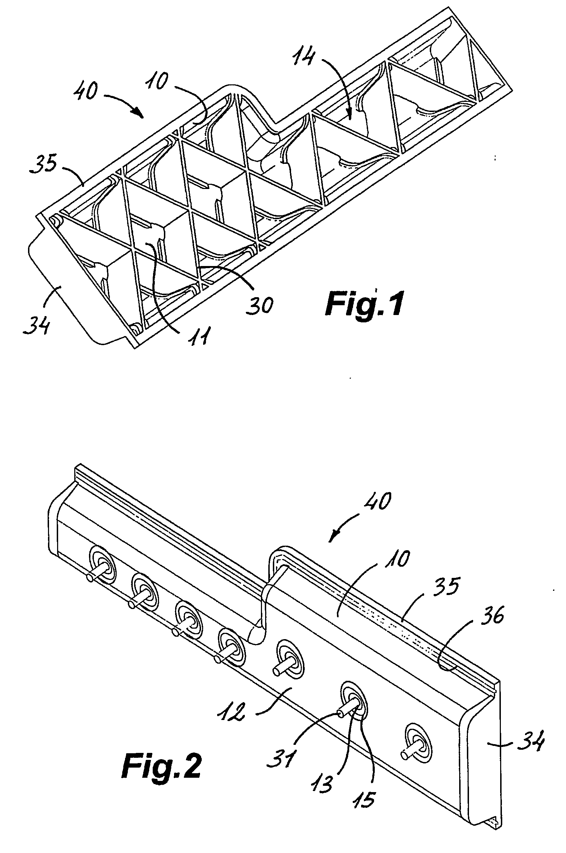

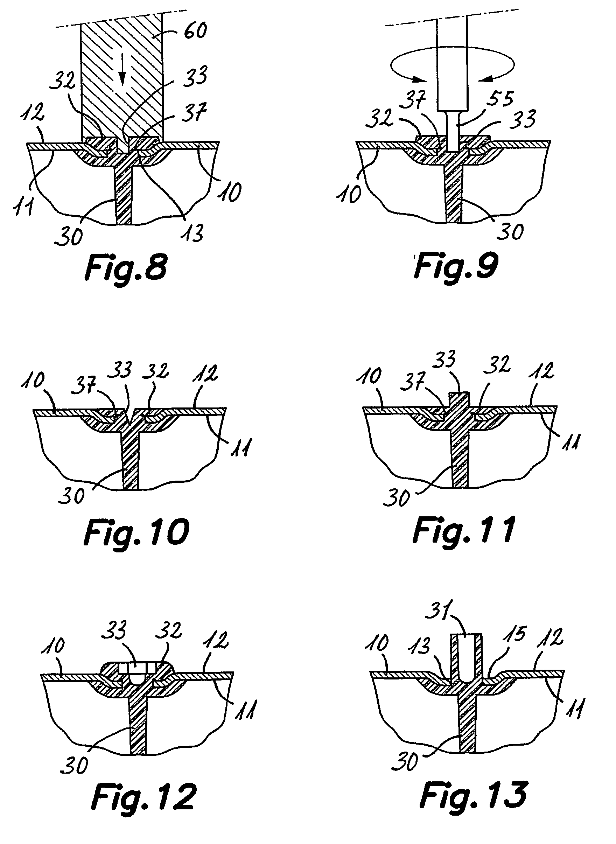

First in reference to Figure 1, the composite structural part of a rigid material and a plastic material is generally designated with reference number 40, and it comprises a plate part 10 of a rigid material, formed by means of a deep-drawing process, whereby it generally comprises a concavity 14 next to a first inner side 11, and a second convex side 12. A series of holes 13 (Figure 2) extend between said first and second sides 11, 12. Advantageously, depressed areas 15 are formed around the holes 13 in the second side 12 of the plate part 10. Housed inside said cavity 14 are a plurality of reinforcing ribs 30 of plastic material formed by injection on said first side 11 of the plate part 10. Said reinforcing ribs 30 are relatively thin and form a framework designed to provide desired rigidity and strength to the plate part 10, which is also relatively thin. To that end, the reinforcing ribs 30 are connected to the plate part 10 at different discrete connection points by means of fixing heads 32 (not shown in Figure 1). Each one of said fixing heads 32 is of plastic material integral to said reinforcing ribs 30 and is connected thereto through a respective hole 13, said fixing head 32 extending (as better shown in Figures 8 to 12) on an area of the second side 12 of the plate part 10 adjacent the hole 13.

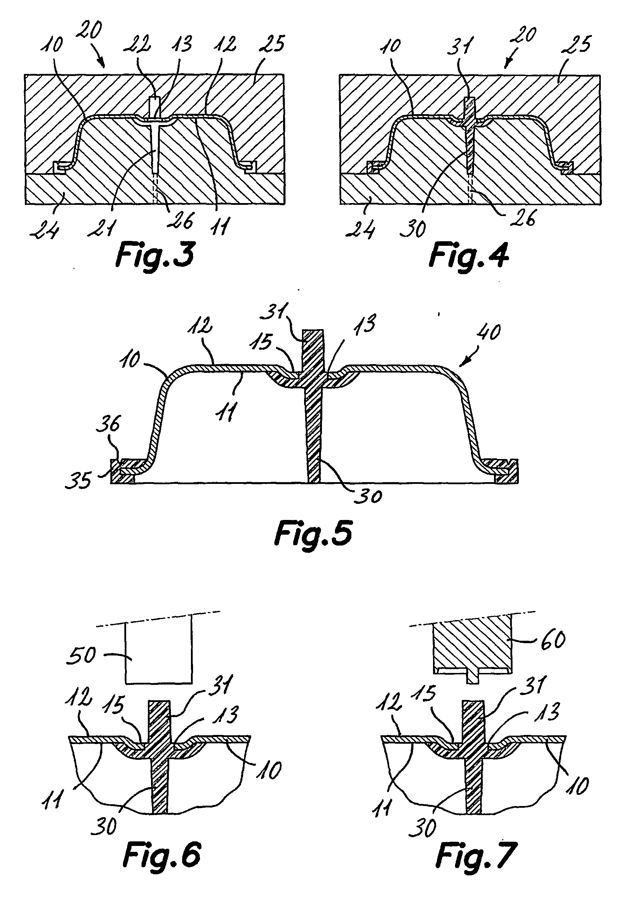

Each of the fixing heads 32 is made of a plastic material deformed by application of heat and pressure, said plastic material coming from a projection 31 integral to the reinforcing rib 30 and projecting from the second side 12 through the hole 13 during one phase of its manufacture, as shown in Figure 2. The projection 31 is formed by injection together with the reinforcing rib 30 and said deformation is carried out in a subsequent operation, according to the process of the present invention disclosed below in relation to Figures 3 to 13.

Preferably, the rigid material of the plate part 10 is a metallic material, such as steel or aluminum, but it can also be a rigid synthetic material, and the plastic material of the reinforcing ribs 30 is selected from a group including polypropylenes and polyamides, possibly with fillers. The structural part 40 is very strong and rigid in relation to its light weight, and is suitable, for example, for vehicle structural parts in which high demands and relatively low weight are required, for example front panels, door modules, rear modules, etc.

As shown in Figures 8 to 12, the fixing head 32 includes a grip configuration 33 configured and arranged so as to be engaged by an actuation tool adapted to apply a turning torque to the fixing head 32 exceeding a predetermined threshold which is enough to break, by torsion, an area of the plastic material included between the reinforcing rib 30 and the fixing head 32, to facilitate the separation of the rigid material of the metal part 10 and the plastic material of the reinforcing rib 30 for recycling purposes. Said grip configuration 33 can have different configurations, including a variety of cavities of non-circular cross section, and a variety of projections of non-circular cross section, and combinations thereof, as described below.

In the embodiment example shown in Figures 1 and 2, the structural part 40 includes end caps 34 and side strips 35, the materials integrating it being of the same plastic material as the reinforcing ribs 30 and fixing heads 32 and obtained by injection together with said ribs. The strips 35 encircle edges of the plate part 10 (see Figure 5) and include longitudinal incisions 36 for the purpose of providing perforation lines which are easily breakable when the components are to be separated for recycling purposes. Alternatively, rather than the strip 35, the plastic material could have only some connection points (not shown) encircling the edge of the plate at the ends of the reinforcing ribs 10, or preferably with connection points by means of fixing heads 32 arranged in holes along the edge of the plate.

In reference to Figures 3 to 13, the manufacturing process of the composite structural part 40 according to the present invention is described below. It must be pointed out that in said figures, the thickness of the plate and the size of certain configurations have been exaggerated for greater clarity of the drawing.

The process comprises, first, forming a plate part 10, of a rigid material, provided with first and second sides 11, 12 and holes 13 extending between said first and second sides 11, 12. Then, said plate part 10 is arranged inside a plastic injection mold 20 (Figure 3) which, as is well known in the sector, comprises first and second half-molds 24, 25 actuated to close one of them over the other one and which define between both a housing for the plate part 10 and at least first cavities 21, corresponding to said configurations or reinforcing ribs 30, and second cavities 22, corresponding to at least several projections 31. Said first cavities 21 are adjacent said first side 11 of the plate part 10 and facing said hole 13, whereas said second cavities 22 are adjacent said second side 12 of the plate part 10 and also facing the hole 13 on this other side, the cross section of the second cavities 22 being equal to or smaller than the cross section of the holes 13.

When the plate part is in position inside the mold 20, the process comprises injecting a melted plastic material into said mold 20 (Figure 4) to fill the first and second cavities 21, 22. In the example shown, an injection inlet 26 connects with the first cavities 21 such that the second cavities fill with plastic material from the first cavities 21 through the holes 13, although the injection inlet could also be connected with one of the second cavities 22, or there could be multiple inlets connected with the first and second cavities.

Next, as shown in Figure 5, the plate part 10 is withdrawn from the mold 20 with the reinforcing ribs 30 of plastic material formed next to the first side 11 of the plate part 10 and the projections 31 of plastic material integral to said reinforcing rib 30 projecting from said second side 12 of the plate part 10 through the holes 13. The structural part 40 shown in Figure 2 also corresponds to this stage.

Then, said projection 31 is deformed by applying heat (Figure 6) and pressure (Figure 7) for the purpose of flattening and extending the plastic material from which the projection is made on at least one area of the second side 12 of the plate part 10 adjacent the hole 13 forming a fixing head 32. This step results in a composite structural part 40 integrated by the plate part 10 and the reinforcing ribs 30 firmly connected thereto by means of said fixing heads 32. Advantageously, this last step furthermore includes forming a grip configuration 33 in the fixing head 32 susceptible of being engaged by an actuation tool for the purpose of applying a turning torque to the fixing head 32 exceeding a predetermined threshold which is enough to break, by torsion, an area of the plastic material included between the reinforcing rib 30 and the fixing head 32, and thereby facilitating the separation of the rigid material of the metal part 10 and the plastic material of the reinforcing rib 30 for recycling purposes.

Said application of heat and pressure is carried out by means of a hot body adapted to simultaneously form the fixing head 32 and said grip configuration 33, although it is preferable to carry out these operations separately. Figure 6 illustrates the step of the application of heat by means of the approaching of a hot body 50 for a predetermined time. However, said application of heat can likewise be carried out by means of any heat source of those normally used in the sector, such as an ultrasonic vibration source or a hot air blower (not shown), for example. The choice of any source, the working temperature and the heating time shall be chosen according to the materials and the desired strength.

When the plastic material of the projection 31 is softened due to the effect of heating, said application of pressure is carried out, which is then done by means of a cold punch 60 such as, for example, the one shown in Figure 7, which is adapted to simultaneously form the fixing head 32 and said grip configuration 33. This formation operation is shown in Figure 8. Alternatively, the application of pressure can be carried out after the heating by means of a first cold punch (not shown) adapted to form the fixing head 32 and immediately after by means of a second cold punch (not shown) adapted to form said grip configuration 33.

In the embodiment example shown in Figures 3 to 7, the second cavity 22 of the mold 20, and accordingly the projection 31, has a smaller cross section than that of the hole 13. This results in the fact that when the plastic material softened by the application of heat is pressed downwards and towards the sides, small folds or cavities 37 are formed next to the edges of the hole 13 which aid in a greater ease of breaking the connection points by torsion, as can be observed in Figures 8 to 11.

In the embodiment examples shown in Figures 7 to 9, the grip configuration 33 comprises, for example, a transverse groove susceptible of being engaged, as shown in Figure 9, by an actuation tool 55 suitable to that end, for the purpose of applying a turning torque to the fixing head 32 which is enough to break, by torsion, the area of the plastic material located between the reinforcing rib 30 and the fixing head 32. This facilitates the separation of the rigid material of the metal part 10 and the plastic material of the reinforcing rib 30, by pulling, for recycling purposes.

Figure 10 shows a fixing head 32 variant in which an upper surface thereof is substantially flush with the second side 12 of the plate part and the grip configuration 33 comprises, for example, a transverse notch. Figure 11 shows another fixing head 32 variant in which an upper surface thereof is also flush with the second side 12 of the plate part but the grip configuration 33 comprises a projecting configuration, for example, of polygonal cross section. Figure 12 shows yet another fixing head 32 variant in which an upper surface thereof projects from the second side 12 of the plate part and the grip configuration 33 comprises a cavity, for example, of hexagonal cross section. Each of these variants is, of course, adapted to be engaged by a different actuation tool, as appropriate.

Finally, Figure 13 shows a configuration variant for the projection 31 comprising an upright, hollow tubular rod. This tubular-shaped projection 31 is suitable, for example, for being formed in the fixing head 32 and grip configuration 33 shown in Figure 12.

A person skilled in the art could devise other, multiple variations without exceeding the scope of the invention as it is defined in the attached claims.

## Claims

1. A process for manufacturing a composite structural part of a rigid material and a plastic material, **characterized by** comprising the steps of:
a) forming at least a plate part (10) of a rigid material provided with a first side (11) and a second side (12) and at least one hole (13) extending between said first and second sides (11, 12);
b) arranging said plate part (10) inside a plastic injection mold (20) which defines a housing for the plate part (10) and at least a first cavity (21), corresponding to at least one configuration or reinforcing rib, facing said hole (13), which is at least one in number, on said first side (11) of the plate part (10), and at least a second cavity (22), corresponding to at least one projection, facing the hole (13) on said second side (12) of the plate part (10), the cross section of said second cavity (22) being equal to or smaller than the cross section of the hole (13);
c) injecting a melted plastic material into said mold (20) to fill the first cavity (21) and said second cavity (22), which is at least one in number;
d) withdrawing the plate part (10) from the mold (20) with at least one reinforcing rib (30) of plastic material formed adjacent said side (11) of the plate part (10) and at least one projection (31) of plastic material integral to said reinforcing rib (30) projecting from said second side (12) of the metal part (10) through the hole (13);
e) deforming said projection (31) by application of heat and pressure for the purpose of flattening and extending the plastic material of which it is constituted on at least one area of the second side (12) of the plate part (10) adjacent the hole (13), forming a fixing head (32), resulting in a composite structural part (40) integrated by the metal part (10) and the reinforcing rib (30) firmly connected thereto by means of said fixing head (32).

2. A process according to claim 1, **characterized in that** step e) furthermore includes forming a grip configuration (33) in the fixing head (32) susceptible of being engaged by an actuation tool (55) for the purpose of applying a turning torque to the fixing head (32) exceeding a predetermined threshold which is enough to break, by torsion, an area of the plastic material included between the reinforcing rib (30) and the fixing head (32), and thereby facilitating the separation of the rigid material of the metal part (10) and the plastic material of the reinforcing rib (30) for recycling purposes.

3. A process according to claim 1, **characterized in that** said step c) comprises injecting said melted plastic material into the first cavity (21) to fill said first cavity (21) and, subsequently, said second cavity (22) through said hole (13).

4. A process according to claim 1, **characterized in that** said step a) comprises forming the plate part (10) by means of a deep-drawing process to create at least one concavity (14) next to the first side (11) intended for housing the reinforcing rib (30), which is at least one in number.

5. A process according to claim 4, **characterized in that** said step a) comprises forming a depressed area (15) around the hole (13), which is at least one in number, in the second side (12) of the plate part (10).

6. A process according to any one of claims 1 to 4, **characterized in that** said rigid material of the plate part (10) is a metallic material.

7. A process according to any one of claims 1 to 4, **characterized in that** said rigid material of the plate part (10) is a synthetic material.

8. A process according to any one of claims 1 to 4, **characterized in that** said plastic material of the reinforcing rib (30) is selected from a group including polypropylenes and polyamides.

9. A process according to any one of claims 1 to 4, **characterized in that** said plastic material of the reinforcing rib (30) is selected from a group including polypropylenes and polyamides with fillers.

10. A process according to claim 2, **characterized in that** said application of heat and pressure is carried out by means of a hot punch adapted to simultaneously form the fixing head (32) and said grip configuration (33).

11. A process according to claim 2, **characterized in that** said application of heat is carried out by means of the approaching of a hot body (50).

12. A process according to claim 2, **characterized in that** said application of heat is carried out by means of an ultrasonic vibration source.

13. A process according to claim 2, **characterized in that** said application of heat is carried out by means of a hot air blower.

14. A process according to claim 11, 12 or 13, **characterized in that** said application of pressure is carried out afterwards by means of a cold punch (60) adapted to simultaneously form the fixing head (32) and said grip configuration (33).

15. A process according to claim 11, 12 or 13, **characterized in that** said application of pressure is carried out afterwards by means of a first cold punch adapted to form the fixing head (32), and immediately after by means of a second cold punch adapted to form said grip configuration (33).

16. A composite structural part of a rigid material and a plastic material, of the type comprising at least one plate part (10) formed from a rigid material provided with a first side (11) and a second side (12) and at least one hole (13) extending between said first and second sides (11, 12), and at least one reinforcing rib (30) of plastic material formed by injection on said first side (11) of the plate part (10) and fixed thereto by at least one fixing head (32) of plastic material integral to said reinforcing rib (30) and connected thereto through the hole (13), said fixing head (32) extending at least on one area of the second side (12) of the plate part (10) adjacent the hole (13), **characterized in that** the fixing head (32) is made of a plastic material deformed by application of heat and pressure, said plastic material coming from a projection (31) integral to the reinforcing rib (30) and projecting from the second side (12) through the hole (13), said projection (31) being formed by injection together with the reinforcing rib (30), and said deformation being carried out in a subsequent operation.

17. A composite structural part according to claim 16, **characterized in that** the fixing head (32) includes a grip configuration (33) configured and arranged to be engaged by an actuation tool (55) adapted to apply a turning torque to the fixing head (32) exceeding a predetermined threshold which is enough to break, by torsion, an area of the plastic material included between the reinforcing rib (30) and the fixing head (32), to facilitate the separation of the rigid material of the plate part (10) and the plastic material of the reinforcing rib (30) for recycling purposes.

18. A composite structural part according to claim 17, **characterized in that** said grip configuration (33) is a cavity of non-circular cross section.

19. A composite structural part according to claim 17, **characterized in that** said grip configuration (33) is a projection of non-circular cross section.
